# EUROPÄISCHE PATENTSCHRIFT

(11) **EP 1 337 921 B1**
(45) Veröffentlichungstag und Bekanntmachung des Hinweises auf die Patenterteilung: **05.01.2011**
(21) Anmeldenummer: 01996788.4
(22) Anmeldetag: 16.10.2001
(51) Int. Cl.: G06F 11/00

(54) **VORRICHTUNG ZUR ÜBERWACHUNG EINES PROZESSORS**
DEVICE FOR MONITORING A PROCESSOR
DISPOSITIF DE CONTROLE D'UN PROCESSEUR

(30) Priorität: 14.11.2000 DE 10056408
(43) Veröffentlichungstag der Anmeldung: 27.08.2003
(73) Patentinhaber: ROBERT BOSCH GMBH, 70442 Stuttgart (DE)
(72) Erfinder: SCHUMACHER, Hartmut, 71691 Freiberg (DE); TAUFER, Peter, 71272 Renningen (DE); TSCHENTSCHER, Harald, 71723 Grossbottwar (DE); HUBER, Thomas, 71717 Beilstein (DE); ULMER, Michael, 72116 Moessingen (DE)
(86) Internationale Anmeldenummer: PCT/DE2001/003954
(87) Internationale Veröffentlichungsnummer: WO 2002/041148

(56) Entgegenhaltungen:
- EP-A- 0 535 761
- US-A- 4 635 258
- US-A- 4 726 024
- US-A- 4 727 549

## Beschreibung

### Stand der Technik

Die Erfindung geht aus von einer Vorrichtung zur Überwachung eines Prozessors nach der Gattung des unabhängigen Patentanspruchs.

Es ist bereits bekannt, für einen Mikrocontrollersystem einen Watchdog vorzusehen, der in vorgegebenen Zeitintervallen getriggert wird und selbst diese Triggerung in bestimmten Zeitfenstern erwartet. Dies nennt man dann einen Fenster-Watchdog. Wird der Watchdog außerhalb des Fensters getriggert, kommt es zu einem Reset (Neustart) des Mikrokontrollersystems.

### Vorteile der Erfindung

Die erfindungsgemäße Vorrichtung hat Vorteile. Es ist bekannt , dass die Aufgaben des Watchdogs getrennt und unabhängig voneinander aber parallel erledigt werden können. Damit werden dann nicht nur dominante Fehler erkannt, sondern alle bei den jeweiligen Erledigungen der Aufgaben vorkommende Fehler. Zu diesen Aufgaben gehören die Systemtaktüberwachung, die Überwachung der korrekten Abfolge von systemrelevanten Softwarebasisfunktionen und die Überwachung von Built-In-Self-Tests von Systemkomponenten, wie es beispielsweise Speicherbausteine oder andere prozessorinterne Komponenten sind.

Weiterhin wird auf eine Resetfunktion verzichtet, es wird hier vielmehr bei erkannten Fehlern eine Fehlermeldung dem Prozessor, das ist der Mikrocontroller, signalisiert und ein Fehlerzähler wird gegebenenfalls inkrementiert. Damit ist es möglich, dass der Prozessor jederzeit mit dem Watchdog, aber auch mit der Umgebung des Steuergeräts, in dem sich der Prozessor befindet, kommunizieren kann.

Erfindungskennzeichnend ist, dass der Watchdog eine Softwareüberprüfung durch das Übersenden von Testfragen an den Prozessor durchführt, wobei der Watchdog dann vom Prozessor entsprechende Antworten auf Richtigkeit überprüft und ob diese Antworten zum richtigen Zeitpunkt empfangen wurden. Damit werden die relevanten Softwarebasisfunktionen des Prozessors auf korrekte Funktion hin überprüft.

Durch die in den abhängigen Ansprüchen aufgeführten Maßnahmen und Weiterbildungen sind vorteilhafte Verbesserungen der im unabhängigen Patentanspruch angegebenen Vorrichtung zur Überwachung eines Prozessors möglich.

Darüber hinaus ist es von Vorteil, dass die Überprüfung von Systemkomponenten durch Testaufträge vom Watchdog an den Prozessor initialisiert werden, wobei der Watchdog dann entsprechende Auftragsbestätigungen auf Richtigkeit und den entsprechenden Zeitpunkt des Empfangs der Auftragsbestätigung hin überprüft.

Aus US 4,727,549 ist es bekannt, einen Watchdog-Timer zu verwenden. Weiterhin wird ein sogenannter WAM (Watchdog Activity Monitor) vorgeschlagen, der periodisch gestartet wird, um einen Selbsttest eines Computers durchzuführen. Für den WAM führt die CTU einen Selbsttest durch und gibt eine Sequenz von Zustandsübergangssignalen nach jedem Subtest aus. Das Versagen, den Test zu beenden, was durch die Zahl der Zustandsübergangssignale geprüft wird, führt zu einer entsprechenden Fehlerbeharidlung.

Es ist von Vorteil, dass bei einem erkannten Fehler eine Sperrung des an den Prozessor angeschlossenen Geräts, vorzugsweise einer Endstufe zum Zünden eines Airbags, für eine vorgegebene Zeit durch den Watchdog direkt vorgenommen wird. Werden innerhalb dieser Sperrzeit weitere Fehler erkannt, wird die Sperrung entsprechend verlängert. Führt ein Fehler zu einer Sperrung wird ein Fehlerzähler inkrementiert. Ist der Fehlerzähler gleich einem vorgegebenen Wert, dann wird die Sperrung bis zu einem Abschalten des Watchdogs durchgeführt. Bei einem Kraftfahrzeug ist dies die Zeitspanne, bis der Fahrzyklus abgeschlossen ist, also das Fahrzeug ausgeschaltet wird.

Es ist weiterhin von Vorteil, dass, wenn die erfindungsgemäße Vorrichtung eingeschaltet wird, zunächst eine Sperrung des an den Prozessor angeschlossenen Geräts vorliegt und diese Sperrung nur aufgehoben wird, wenn eine Fehlerfreiheit des Systemtakts, der Software des Prozessors und der Systemkomponenten vorliegt. Damit wird ermöglicht, dass das an den Prozessor angeschlossene Gerät nur bei einem korrekt funktionierenden Prozessor angesteuert werden kann.

Dabei ist es von Vorteil, dass der Prozessor den aktuellen Fehlerzählerstand und die Einzelfehler von dem Watchdog auslesen kann. Damit ist eine genaue Analyse der Fehler möglich. Auch eine Progonose, Hinweise zur Korrektur oder gar eine Warnung kann damit erzeugt werden.

Schließlich ist es auch von Vorteil, dass der Zeitpunkt des Empfangs der Auftragsbestätigung bzw. der Antwort des Prozessors durch einen internen Zähler des Watchdogs festgestellt wird und dass wenn der Zeitpunkt über- oder unterschritten wird, auf einen Fehler erkannt wird.

### Zeichnung

Ausführungsbeispiele der Erfindung sind in der Zeichnung dargestellt und werden in der nachfolgenden Beschreibung näher erläutert. Es zeigt Figur 1 ein Blockschaltbild der erfindungsgemäßen Vorrichtung, Figur 2 ein Flußdiagramm eines Verfahrens der erfindungsgemäßen Vorrichtung und Figur 3 ein Blockschaltbild des Watchdogs, das die jeweiligen Funktionsblöcke für die einzelnen Überprüfungen zeigt.

### Beschreibung

Heutige Watchdogs müssen verschiedene Aufgaben zur Überwachung eines Prozessors durchführen. Häufig wird dabei als Prozessor ein Mikrokontroller in sicherheitskritischen Systemen eingesetzt. Es sind dabei jedoch auch andere Prozessortypen einsetzbar. Sicherheitskritische Systeme sind beispielsweise Rückhaltesysteme in einem Kraftfahrzeug. Hier ist daher eine Überprüfung eines steuernden Prozessors notwendig, um eine Fehlauslösung eines Airbags zu verhindern, die zu Verletzungen führen kann. Der Prozessor befindet sich dabei mit dem Watchdog in einem Steuergerät für das Rückhaltesystem.

Erfindungsgemäß wird daher eine Vorrichtung eingesetzt, die für die verschiedenen Aufgaben jeweils eine eigene Hardware in einem Watchdog aufweist, so dass eine Parallelverarbeitung der Aufgaben vorliegt. Weiterhin hat die erfindungsgemäße Vorrichtung den Vorteil, dass beim Vorliegen eines Fehlers mit der Umgebung, beispielsweise mit externer Diagnose-Software, kommuniziert werden kann, da kein Neustart, also kein Reset vorgenommen wird. Der Watchdog erfüllt hier folgende Aufgaben gleichzeitig und unabhängig voneinander: Die Überwachung des Systemtakts des Prozessors, die Softwareüberprüfung bei dem Prozessor und die Überwachung der Tests von Systemkomponenten des Prozessors, beispielsweise von Speicherbausteinen (RAM). Für jede dieser drei Aufgaben ist ein eigener Block an Hardware vorhanden, wobei dies alternativ auch auf einem Prozessor ablaufen kann, der den jeweiligen Aufgaben entsprechende Rechenzeit zuordnet. Frage beziehungsweise Auftrag werden vom Watchdog an den Prozessor übergeben. Die Frage wird mittels kleiner Watchdogfunktionen manipuliert, die in den Softwarebasisfunktionen des Prozessors ablaufen. Die Aufträge stoßen Testroutinen im Hintergrund an. Diese Tests prüfen dann beispielsweise RAM, ROM und/oder andere Systemkomponenten.

Wird ein Fehler erkannt, wird eine Sperrung durch den Watchdog eines an den Prozessor angeschlossenen Geräts veranlasst. Damit wird verhindert, dass eine Fehlfunktion des Prozessors zur Auslösung eines Geräts, beispielsweise eines Rückhaltesystems führt.

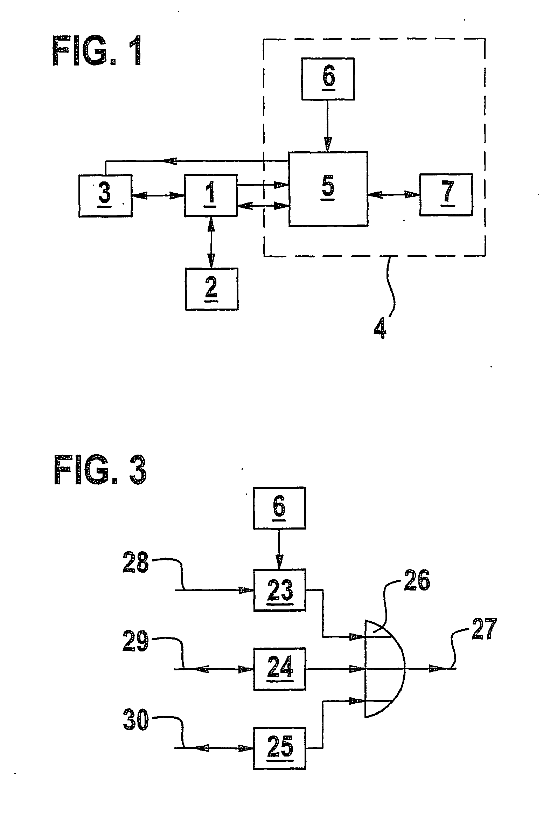

In Figur 1 ist ein Blockschaltbild der erfindungsgemäßen Vorrichtung zur Überwachung eines Prozessors dargestellt. Ein Watchdog 4 weist die Komponenten Fenster-Watchdog 5, Taktgeber 6 und Zähler 7 auf. Der Fenster-Watchdog 5 weist Logikschaltkreise auf. Ein Prozessor 1 ist über einen ersten Datenein-/-ausgang mit einem Speicher 2 verbunden, wobei der Speicher 2 auch im Prozessor 1 integriert sein kann. Der Prozessor 1 ist über einen zweiten Datenein-/-ausgang mit einem Rückhaltesystem 3 verbunden. Die Verbindung kann auch über einen Bus realisiert sein. Über einen dritten Datenein-/-ausgang ist der Prozessor 1 mit dem Fenster-Watchdog 5 verbunden. Ein Datenausgang des Prozessors 1 führt zu einem ersten Dateneingang des Fenster-Watchdogs 5. Gegebenenfalls sind innerhalb des Fenster-Watchdogs 5 Taktteiler vorhanden, die den Takt entsprechend teilen. An einen zweiten Dateneingang des Fenster-Watchdogs 5 ist der Taktgeber 6 angeschlossen. Der Taktgeber 6 ist unabhängig von dem Takt, den der Prozessor 1 verwendet. Über einen zweiten Datenein-/-ausgang ist der Fenster-Watchdog 5 mit dem Zähler 7 verbunden. Der Taktgeber 6 und der Zähler 7 können jeweils Bestandteil des Fenster-Watchdogs 5 sein. Anstatt des einen Zählers 7 können jeweils ein Zähler für die Überwachung der Softwarebasisfunktionen und ein Zähler für die Überwachung der Tests der Systemkomponenten vorgesehen sein. Weiterhin ist der Fenster-Watchdog 5 über einen Datenausgang direkt mit dem Rückhaltesystem 3 verbunden, um bei einem erkannten Fehler das Rückhaltesystem 3 zu sperren.

Der Prozessor 1 steuert hier das Rückhaltesystem 3. Dazu ist der Prozessor 1 gegebenenfalls mit Sensoren verbunden, um ein Auslöseereignis für das Rückhaltesystem 3 zu erkennen und um gegebenenfalls zu schützende Personen im Fahrzeug zu klassifizieren. Der Prozessor 1 wird in seiner Funktion durch den Fenster-Watchdog 5 überprüft. Diese Funktionsüberprüfung gliedert sich in drei Aufgaben auf. Zum einen wird der Systemtakt des Prozessors 1 überprüft, um festzustellen, ob dieser Systemtakt von einem vorgegebenen Wert abweicht. Dazu überträgt der Prozessor 1 seinen Systemtakt an den Fenster-Watchdog 5.

Der Fenster-Watchdog 5 zählt diesen Takt und vergleicht ihn mit einem Referenztakt, der mit dem Taktgeber 6 erzeugt wird. Ist die Abweichung zwischen dem Systemtakt des Prozessors 1 und dem Takt des Taktgebers 6 über einem bestimmten Schwellwert, dann wird auf einen Fehler erkannt. Dieser Fehler wird dann dem Prozessor 1 signalisiert, ein Fehlerzähler wird inkrementiert und der Fenster-Watchdog 5 veranlasst, über direkte Leitungen, dass das Rückhaltesystem 3 für eine bestimmte Zeit gesperrt wird. Wird innerhalb dieser vorgegebenen Zeit ein weiterer Fehler erkannt, dann wird die Sperrung um eine entsprechende Zeit verlängert.

Der Fenster-Watchdog 5 überprüft weiterhin die Funktionsfähigkeit von Softwarebasisfunktionen des Prozessors 1. Diese Softwarebasisfunktionen sind für die grundlegende Funktionalität des Prozessors 1 notwendig.

Die eigentliche Aufgabe eines Steuergeräts für die Rückhaltesysteme 3 ist es, einen Crash zu erkennen. Dazu werden folgende Funktionen als die Softwarebasisfunktionen beispielsweise alle 500µs abgearbeitet:
Einlesen der Sensorsignale
Signalaufbereitung
Algorithmus zur Steuerung des Rückhaltesystems rechnen
Im Crashfall: zugeordnete Zündmittel bestimmen Diese Zündmittel zünden

Diese Funktionen müssen alle abgearbeitet werden, wobei insbesondere diese Reihenfolge eingehalten werden muß. Beispielsweise ist es nicht möglich den Algorithmus zu rechnen, ohne Sensorsignale eingelesen zu haben.

Diese Überprüfung führt der Fenster-Watchdog 5 über seinen ersten Datenein-/-ausgang durch. Dazu versendet der Fenster-Watchdog 5 Testfragen an den Prozessor 1, die der Prozessor 1 gemäß den vorhandenen Softwarebasisfunktionen beantwortet. Diese Antworten überträgt der Prozessor 1 dann an den Fenster-Watchdog 5, der die Antworten mit jeweils vorgegebenen Antworten vergleicht und auch den jeweiligen Zeitpunkt bestimmt, an dem er die jeweiligen Antworten empfangen hat. Diese Zeitpunkte bestimmt der Fenster-Watchdog 5 mittels des Zählers 7. Weicht die Antwort oder der Zeitpunkt von vorgegebenen Werten ab, dann erkennt der Fenster-Watchdog 5 auf einen Fehler und führt wie dargestellt die entsprechende Fehlerbehandlung durch (Sperrung des Rückhaltesystems 3). Im Prozessor 1 wird dabei die Frage des Watchdogs 5 unter Zuhilfenahme von einfachen Watchdogfunktionen, das sind im Wesentlichen Schiebe- und Maskieroperationen, verändert. Nachdem alle Watchdogfunktionen, die in den systemrelevanten Softwarebasisfunktionen verteilt sind, abgearbeitet sind, wird der so entstandene Wert als Antwort an den Watchdog zurückgegeben. Bei der Überprüfung durch den Fenster-Watchdog 5 wird sichergestellt, dass die Reihenfolge der Watchdogfunktionen und die Abarbeitung aller Watchdogfunktionen eingehalten wurde. Der Zähler 7 ist derart ausgebildet, dass ein Fehler erkannt wird, wenn die Antwort zu früh oder zu spät kommt.

Der Fenster-Watchdog 5 führt über seinen Datenein-/-ausgang weiterhin eine Überwachung der Tests der Systemkomponenten des Prozessors durch. Dafür übermittelt der Watchdog 5 Testaufträge an den Prozessor 1, die dieser abarbeitet und entsprechende Auftragsbestätigungen an den Fenster-Watchdog 5 zurücksendet. Wiederum überwacht der Fenster-Watchdog 5 anhand der Auftragsbestätigung, ob die Tests der Systemkomponenten richtig waren und zum richtigen Zeitpunkt empfangen wurden. Sind die Auftragsbestätigungen nicht richtig oder kam die Auftragsbestätigung zu früh oder zu spät, dann wird auf einen Fehler erkannt. Mit dem Testauftrag wird ein Test einer Systemkomponente angestoßen. Der Test führt dann selbst zu der Auftragsbestätigung. Hierbei ist sichergestellt, dass die Auftragsbestätigungen nur dann der erwarteten Auftragsbestätigung entspricht, wenn der Test der Systemkomponente fehlerfrei abgearbeitet wurde.

Die Überprüfung der Softwarebasisfunktionen mittels der Watchdogfunktionen wird dabei im Prozessor 1 mit einer höheren Priorität bearbeitet als die Überprüfung der Systemkomponenten. Dabei wird in einer vorgegebenen Zeitdauer nur die Restzeit der Überprüfung der Systemkomponenten zugeordnet. Für jede der drei Aufgaben der Systemtaktüberprüfung, der Softwareüberprüfung und der Systemkomponentenüberprüfung weist der Fenster-Watchdog 5, wie in Figur 3 dargestellt eigene Hardwarekomponenten aus Logikschaltkreisen auf, so dass eine echte Parallelität der Abarbeitung auf Seiten des Fenster-Watchdogs vorliegt.

Der Block 23 ist für die Überprüfung des Takts, der Block 24 für die Überprüfung der Softwarebasisfunktionen und der Block 25 für die Überprüfung der Systemkomponenten zuständig. Am ersten Eingang der Taktüberprüfung 23 wird der Systemtakt angelegt. Dieser wird dann von der Taktüberprüfung 23 auf seine Abweichung vom vorgegebenen internen Referenztakt hin überprüft, wobei am zweiten Eingang des Funktionsblocks 23 der Taktgeber 6 anliegt. Liegt ein Fehler vor, wird am Ausgang des Funktionsblocks 23 ein Signal erzeugt, das mit einem Oder-Gatter 26 verknüpft wird mit den Ausgängen der Funktionsblöcke 24 und 25, so dass, wenn wenigstens ein Fehler erkannt wird, am Ausgang 27 des Oder-Gatters 26 ein Fehler angezeigt wird. Der Funktionsblock 24 ist daneben über seinen Datenein-/-ausgang mit dem Datenein-/-ausgang des Prozessors 1 derartig verbunden, so dass eine Überprüfung der Softwarebasisfunktionen möglich ist. Der Funktionsblock 25 ist dagegen über seinen Datenein-/-ausgang mit dem Prozessor 1 derart verbunden, dass ein Test der Systemkomponenten hierbei möglich ist.

Da der Prozessor 1 mit dem Fenster-Watchdog 5 jederzeit, auch während einer Sperrung kommunizieren kann, ist es weiterhin möglich, dass der Prozessor 1 den Fehlerzählerstand und die Einzelfehler zur weiteren Verarbeitung auslesen kann.

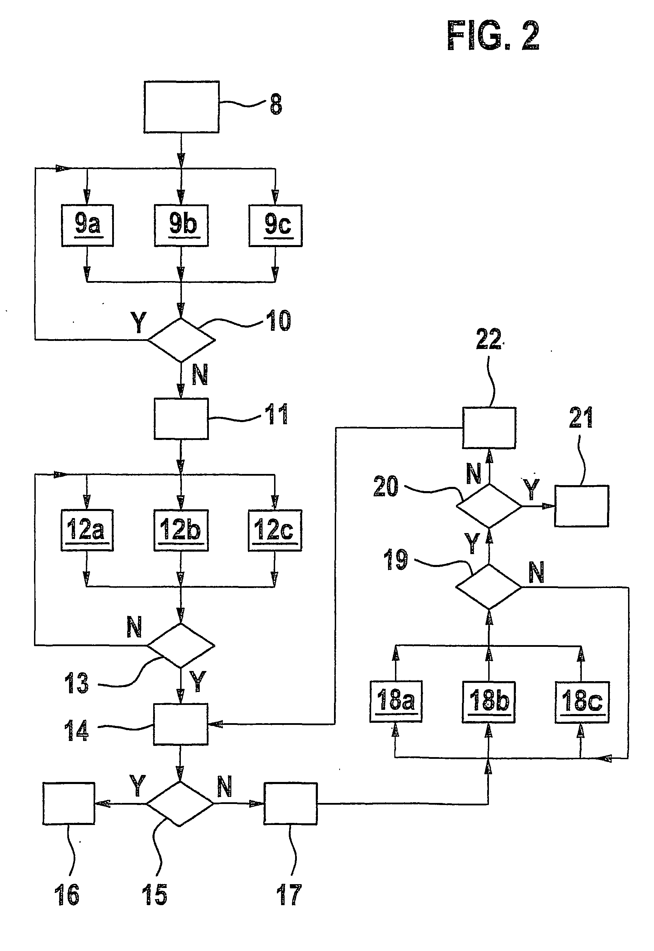

In Figur 2 ist ein Flußdiagramm dargestellt, das den Arbeitsablauf der erfindungsgemäßen Vorrichtung darstellt. In Verfahrensschritt 8 wird die erfindungsgemäße Vorrichtung eingeschaltet, und es wird zunächst eine Sperrung des Rückhaltesystems 1 durch den Fenster-Watchdog 5 veranlasst. In Verfahrensschritten 9a, 9b und 9c werden dann parallel und unabhängig voneinander der Systemtakt, die Softwarebasisfunktionen und die Systemkomponenten überwacht.

In Verfahrensschritt 10 wird überprüft, ob am Oder-Gatter 26 wenigstens ein Fehler angezeigt wird oder nicht. Ist das der Fall, dann wird zu den Verfahrensschritten 9a, 9b und 9c zurückgesprungen, um zu überprüfen, ob der Systemtakt, die Software und die Systemkomponenten schon für eine Mindestzeit in Ordnung sind oder nicht. Alle Teile 23, 24 und 25 des Fenster-Watchdogs 5 müssen beispielsweise für eine Sekunde richtig bedient werden, um das Rückhaltesystem zu entsperren. Nur dann wird auf Fehlerfreiheit erkannt und nach Verfahrensschritt 10 kann dann zu Verfahrensschritt 11 gesprungen werden, um die Sperrung des Rückhaltesystems 3 aufzuheben.

In den Verfahrensschritten 12a, 12b und 12c werden nun erneut Tests des Systemtakts, der Softwarebasisfunktionen und der Systemkomponenten des Prozessors 1 durchgeführt. In Verfahrensschritt 13 wird wiederum überprüft, ob ein Fehler am Ausgang des Oder-Gatters 26 angezeigt wird oder nicht. Ist das nicht der Fall, dann wird zurück zu den Verfahrensschritten 12a, 12b und 12c gesprungen, um erneut die Tests durchzuführen. Wurde jedoch ein Fehler erkannt, dann wird in Verfahrensschritt 14 dieser Fehler dem Prozessor 1 von dem Fenster-Watchdog 5 signalisiert, ein Fehlerzähler wird inkrementiert und das Rückhaltesystem 3 wird gesperrt. In Verfahrensschritt 15 wird weiterhin überprüft, ob der Fehler inzwischen einen vorgegebenen Wert erreicht hat, der zu einer dauerhaften Sperrung des Rückhaltesystems 3 bis zum Abschalten der erfindungsgemäßen Vorrichtung führen würde. Daher wird dann in Verfahrensschritt 16 die Sperrung bis zum Abschalten beibehalten.

In Verfahrensschritt 17 wird aber, wenn der Zählerstand noch nicht erreicht wurde, die Sperrung für eine vorgegebene Zeit eingestellt. In den Verfahrensschritten 18a, 18b und 18c werden erneut der Systemtakt, die Softwarebasisfunktionen und die Systemkomponenten überprüft, um dann in Verfahrensschritt 20 festzustellen, ob ein Fehler innerhalb der Sperrung des Rückhaltesystems 3 erkannt wurde, so dass dann, wenn dies der Fall ist, in Verfahrensschritt 21 die Sperrung entsprechend zu verlängern ist. Ist das nicht der Fall, dann wird in Verfahrensschritt 22 nach Ablauf der Zeitdauer die Sperrung aufgehoben, um dann zu Verfahrensschritt 14 zurückzuspringen.

## Patentansprüche

1. Vorrichtung zur Überwachung eines Prozessors (1), wobei der Prozessor (1) mit einem Watchdog (5) zur Überwachung verbindbar ist, wobei der Watchdog (5) mit einem mit einem internen Taktgeber (6) zur Überwachung eines Systemtakts des Prozessors (1) verbindbar ist, dass der Watchdog (5) Mittel zur Softwareüberprüfung des Prozessors (1) und Mittel zur Überwachung von Tests von Systemkomponenten (2) des Prozessors (1) aufweist, **dadurch gekennzeichnet, dass** der Watchdog (5) bei wenigstens einem erkannten Fehler eine Fehlermeldung an den Prozessor (1) überträgt und einen Fehlerzähler inkrementiert und dass der Watchdog (5) bei der Softwareüberprüfung dem Prozessor (1) Testfragen übermittelt und Antworten des Prozessors (1) auf Richtigkeit und Zeitpunkt überwacht.

2. Vorrichtung nach Anspruch 1, **dadurch gekennzeichnet, dass** bei Überwachung der Tests der Systemkomponenten (2) der Watchdog (5) dem Prozessor (1) Testaufträge übermittelt und der Prozessor (1) dem Watchdog (5) entsprechend der Auftragsbestätigung zurücksendet, die der Watchdog (5) auf Richtigkeit und Zeitpunkt überwacht.

3. Vorrichtung nach einem der vorhergehenden Ansprüche, **dadurch gekennzeichnet, dass** der Watchdog (5) bei dem wenigstens einen erkannten Fehler ein an den Prozessor (1) angeschlossenes Gerät (3) in seiner Funktion für eine vorgegebene Zeitdauer sperrt, wobei der Watchdog (5) direkt mit dem Gerät (3) verbindbar ist.

4. Vorrichtung nach Anspruch 3, **dadurch gekennzeichnet, dass** der Watchdog (5) die Sperrung des Geräts (3) verlängert, sofern der Watchdog (5) während der Sperrung wenigstens einen weiteren Fehler erkennt.

5. Vorrichtung nach einem der vorhergehenden Ansprüche, **dadurch gekennzeichnet, dass**, wenn der Fehlerzähler einen vorgegebenen Wert erreicht hat, der Watchdog (5) eine Sperrung des Geräts (3) bis zur Abschaltung des Watchdogs (5) veranlasst.

6. Vorrichtung nach einem der vorhergehenden Ansprüche, **dadurch gekennzeichnet, dass** das mit dem Prozessor (1) verbindbare Gerät (3) ein Rückhaltesystem ist.

7. Vorrichtung nach einem der vorhergehenden Ansprüche, **dadurch gekennzeichnet, dass** der Watchdog (5) beim Einschalten eine Sperrung des Geräts (3) veranlasst, bis der Watchdog (5) Fehlerfreiheit bei dem Systemtakt, der Software des Prozessors (1) und den Systemkomponenten erkennt.

8. Vorrichtung nach einem der vorhergehenden Ansprüche, **dadurch gekennzeichnet, dass** durch den Prozessor (1) der Fehlerzähler und Einzelfehler von dem Watchdog (5) auslesbar sind.

9. Vorrichtung nach einem der Ansprüche 2 bis 9, **dadurch gekennzeichnet, dass** der Watchdog (5) die Zeitpunkte der Antworten des Prozessors (1) und die Auftragsbestätigungen durch wenigstens einen internen Zähler (7) bestimmt.

## Claims

1. Method for monitoring a processor (1), wherein the processor (1) can be connected to a watchdog (5) for monitoring, wherein the watchdog (5) can be connected to an internal clock generator (6) for monitoring a system clock of the processor (1), and wherein the watchdog (5) has means for checking the software of the processor (1) and means for monitoring tests for system components (2) of the processor (1) **characterized in that**, when at least one fault is detected, the watchdog (5) transmits a fault message to the processor (1) and increments a fault counter, and **in that** during the checking of the software the watchdog (5) transmits test questions to the processor (1) and monitors responses of the processor (1) for correctness and time.

2. Device according to Claim 1, **characterized in that** during the monitoring of the tests of the system components (2) the watchdog (5) transmits test orders to the processor (1), and the processor (1) correspondingly sends back to the watchdog (5) the order confirmation, which the watchdog (5) monitors for correctness and time.

3. Device according to one of the preceding claims, **characterized in that**, when the at least one fault is detected, the watchdog (5) blocks, for a predefined time period, the function of an apparatus (3) which is connected to the processor (1), wherein the watchdog (5) can be connected directly to the apparatus (3).

4. Device according to Claim 3, **characterized in that** the watchdog (5) prolongs the blocking of the apparatus (3) if the watchdog (5) detects at least one further fault during the blocking.

5. Device according to one of the preceding claims, **characterized in that**, if the fault counter reaches a predefined value, the watchdog (5) brings about blocking of the apparatus (3) until the watchdog (5) is switched off.

6. Device according to one of the preceding claims, **characterized in that** the apparatus (3) which can be connected to the processor (1) is a restraining system.

7. Device according to one of the preceding claims, **characterized in that**, when switching on occurs, the watchdog (5) brings about blocking of the apparatus (3) until the watchdog (5) detects freedom from faults in the system clock, in the software of the processor (1) and in the system components.

8. Device according to one of the preceding claims, **characterized in that** the fault counter and individual faults can be read out from the watchdog (5) by the processor (1).

9. Device according to one of Claims 2 to 9, **characterized in that** the watchdog (5) determines times of the responses of the processor (1) and the order confirmations by means of at least one internal counter (7).

## Revendications

1. Dispositif pour surveiller un processeur (1), le processeur (1) pouvant être relié avec un chien de garde (5) pour la surveillance, le chien de garde (5) pouvant être relié avec un générateur d'horloge interne (6) pour surveiller une horloge système du processeur (1), le chien de garde (5) présentant des moyens de contrôle du logiciel du processeur (1) et des moyens pour surveiller les tests des composants système (2) du processeur (1), **caractérisé en ce que** le chien de garde (5), en présence d'au moins une erreur détectée, transmet un message d'erreur au processeur (1) et incrémente un compteur d'erreurs et que le chien de garde (5), lors du contrôle du logiciel, transmet au processeur (1) des questions de test et surveille l'exactitude et l'instant des réponses du processeur (1).

2. Dispositif selon la revendication 1, **caractérisé en ce que** lors de la surveillance des tests des composants système (2), le chien de garde (5) transmet au processeur (1) des ordres de test et le processeur (1) renvoie en conséquence au chien de garde (5) la confirmation de l'ordre dont l'exactitude et l'instant sont surveillés par le chien de garde (5).

3. Dispositif selon l'une des revendications précédentes, **caractérisé en ce que** le chien de garde (5), en présence de ladite au moins une erreur détectée, bloque le fonctionnement d'un appareil (3) raccordé au processeur (1) pendant une durée prédéfinie, le chien de garde (5) pouvant être relié directement avec l'appareil (3).

4. Dispositif selon la revendication 3, **caractérisé en ce que** le chien de garde (5) prolonge le blocage de l'appareil (3) dans la mesure où le chien de garde (5) détecte au moins une erreur supplémentaire pendant le blocage.

5. Dispositif selon l'une des revendications précédentes, **caractérisé en ce que** lorsque le compteur d'erreurs a atteint une valeur prédéfinie, le chien de garde (5) ordonne un blocage de l'appareil (3) jusqu'à la mise hors circuit du chien de garde (5).

6. Dispositif selon l'une des revendications précédentes, **caractérisé en ce que** l'appareil (3) qui peut être relié au processeur (1) est un système de retenue.

7. Dispositif selon l'une des revendications précédentes, **caractérisé en ce que** le chien de garde (5), à la mise en circuit, ordonne un blocage de l'appareil (3) jusqu'à ce que le chien de garde (5) détecte l'absence d'erreur au niveau de l'horloge système, du logiciel du processeur (1) et des composants système.

8. Dispositif selon l'une des revendications précédentes, **caractérisé en ce que** le compteur d'erreurs et des erreurs individuelles peuvent être lus du chien de garde (5) par le processeur (1).

9. Dispositif selon l'une des revendications 2 à 9, **caractérisé en ce que** le chien de garde (5) détermine les instants des réponses du processeur (1) et les confirmations d'ordre par le biais d'au moins un compteur interne (7).
